# DEMANDE DE BREVET EUROPEEN

(11) **EP 3 379 121 A1**
(43) Date de publication de la demande: **26.09.2018**
(21) Numéro de dépôt: 18162236.6
(22) Date de dépôt: 16.03.2018
(51) Int. Cl.: F16K 37/00, E03B 7/07, G01F 15/00, G01F 15/06, G01F 15/075, F16K 31/40

(54) **ÉLECTROVANNE POUR SURVEILLER ET COMMANDER L'ALIMENTATION EN FLUIDE D'UNE INSTALLATION D'UN BATIMENT, ET DISPOSITIF COMPORTANT EN OUTRE UNE TELLE ELECTROVANNE**

(30) Priorité: 21.03.2017 FR 1770277
(71) Demandeur: Le Savoir Industriel, 95100 Argenteuil (FR)
(72) Inventeur: KUCHLY, Pierre, 78720 SAINT FORGET (FR)
(74) Mandataire: Audusseau-Girardeau, Magaly

(57) **Abrégé**

L'invention concerne une électrovanne pour surveiller et commander l'alimentation en fluide d'une installation d'un bâtiment, ladite installation comportant une canalisation dans laquelle circule un fluide, ladite électrovanne comportant un corps (2) d'électrovanne, une entrée (23) à raccorder à ladite canalisation (10), une sortie (24) à raccorder également à ladite canalisation (10), un passage (25) ménagé entre ladite entrée (24) et ladite sortie (25), équipé d'un moyen de fermeture (31) étanche mobile entre une position ouverte, suivant laquelle le fluide est autorisée à circuler dans ledit passage (25) entre ladite entrée (23) et ladite sortie (24), et une position fermée suivant laquelle le passage (25) est obstrué et interdit toute circulation de fluide entre ladite entrée (23) et ladite sortie (24). L'électrovanne comporte un dispositif (4) de commande du moyen de fermeture (31) associé à un débitmètre (5). Conformément à l'invention, le débitmètre (5) comporte une chambre interne (50) ménagée dans le corps de l'électrovanne et l'électrovanne comporte un circuit secondaire de passage de fluide entre l'entrée de la chambre et la sortie de la chambre, l'entrée et la sortie étant reliées au circuit primaire de passage de fluide.

## Description

L'invention a trait à la surveillance et au fonctionnement d'un circuit d'alimentation en fluide d'un bâtiment, par exemple, ou d'une installation d'arrosage automatique, ou plus généralement à la surveillance et à la commande d'une alimentation en fluide, ou non, d'une installation desservie en fluide.

Elle concerne par ailleurs des perfectionnements apportés dans le domaine des électrovannes et des dispositifs équipés d'électrovannes, dédiés à la surveillance de fuites de fluide (par exemple des fuites d'eau) dans les canalisations alimentant les bâtiments.

On connait du document WO 2016 079353 une installation permettant de détecter des fuites de fluide et d'y remédier.

Une telle installation comporte une électrovanne, apte à couper l'alimentation en fluide d'un circuit, un débitmètre et un commutateur de pression. La mise en oeuvre de l'installation implique le fonctionnement de l'électrovanne avec le commutateur de pression ou avec le débitmètre, suivant le type de fuite détectée (petite fuite ou grosse fuite).

Une telle technologie peut permettre de détecter des fuites et d'y apporter des solutions. Néanmoins, cette installation nécessite d'introduire plusieurs dispositifs dans le circuit de fluide et elle peut être encombrante ou malaisée à installer.

A l'origine de l'invention, le problème était donc de proposer un dispositif qui soit facile à installer, peu encombrant et permettant la détection de fuite dans le circuit.
On connait du document WO 2013/006707 une électrovanne pour surveiller et commander l'alimentation en fluide d'une installation d'un bâtiment, ladite installation comportant une canalisation dans laquelle circule un fluide, ladite électrovanne comportant :
- Un corps d'électrovanne,
- Une entrée à raccorder à ladite canalisation,
- Une sortie à raccorder également à ladite canalisation,
- Un passage ménagé entre ladite entrée et ladite sortie, formant un circuit primaire de passage de fluide, équipé d'un moyen de fermeture étanche qui est mobile entre une position ouverte, suivant laquelle le fluide est autorisée à circuler dans ledit passage entre ladite entrée et ladite sortie, et une position fermée suivant laquelle le passage est obstrué et interdit toute circulation de fluide entre ladite entrée et ladite sortie,
- Un dispositif de commande du moyen de fermeture,
ladite électrovanne comportant en outre un débitmètre apte à acquérir des données concernant le débit de fluide traversant ladite électrovanne et apte à transmettre lesdites données acquises à un module extérieur à ladite électrovanne.

Dans le cadre d'un mode de réalisation présenté dans ce document, le débitmètre se trouve dans le conduit d'entrée de la vanne. Le débitmètre offre ainsi des informations sur le flux principal de fluide circulant : il permet, par exemple, de compter la quantité de flux traversant la vanne pour, par exemple, quantifier la consommation d'eau.

En revanche, le débitmètre ne permet pas de détecter des petites fuites (micro fuites) dans la canalisation : ainsi, si un joint est défectueux ou si une canalisation est abimée (mais pas inopérante), une telle vanne décrite dans le document WO 2013/006707 ne le détectera pas.

L'invention vise à permettre la détection de ces micro fuites. Elle vise également à offrir un dispositif facile à monter sur une installation existante, par exemple sur un tuyau d'alimentation en fluide d'un bâtiment et qui puisse être associé à d'autres dispositifs ou services, par exemple une application sur un smartphone ou à une site Internet, de manière à offrir un service de commande du fonctionnement du circuit à la demande ou automatique, suivant plusieurs scénarios prédéterminés.
Elle propose à cet effet, dans un premier temps, une électrovanne pour surveiller et commander l'alimentation en fluide d'une installation d'un bâtiment, ladite installation comportant une canalisation dans laquelle circule un fluide, ladite électrovanne comportant :
- Un corps d'électrovanne
- Une entrée à raccorder à ladite canalisation,
- Une sortie à raccorder également à ladite canalisation,
- Un passage ménagé entre ladite entrée et ladite sortie, formant un circuit primaire de passage de fluide, équipé d'un moyen de fermeture étanche qui est mobile entre une position ouverte, suivant laquelle le fluide est autorisée à circuler dans ledit passage entre ladite entrée et ladite sortie, et une position fermée suivant laquelle le passage est obstrué et interdit toute circulation de fluide entre ladite entrée et ladite sortie,
- Un dispositif de commande du moyen de fermeture.
L'électrovanne conforme à l'invention comporte en outre un débitmètre apte à acquérir des données concernant le débit de fluide traversant ladite électrovanne et apte à transmettre lesdites données acquises à un module extérieur à ladite électrovanne.
L'électrovanne selon l'invention est remarquable en ce que le débitmètre comporte une chambre ménagée dans le corps de l'électrovanne, ladite chambre comportant en outre une entrée de chambre et une sortie de chambre qui sont reliées audit circuit primaire de passage du fluide dans l'électrovanne, un circuit secondaire de passage de fluide étant défini entre ladite entrée de chambre et ladite sortie de chambre.

L'électrovanne ainsi réalisée constitue un dispositif qui combine plusieurs fonctions : la commande de la fermeture ou de l'ouverture du passage de fluide et le contrôle d'un débit de fluide dans le circuit de fluide sur lequel l'électrovanne conforme à l'invention peut être montée.

Le dispositif est ainsi compact et facile à monter sur un circuit existant, de la même façon que l'on monterait une électrovanne classique connue.

La présence de la chambre, dans laquelle est positionné le débitmètre, et du circuit secondaire permet de détecter les micro-fuites non détectées par les débitmètres des électrovannes qui sont placés directement dans les conduits d'entrée ou de sortie.

Selon un mode de réalisation de l'électrovanne conforme à l'invention, les données acquises et transmises peuvent être des impulsions électriques.

Selon encore un mode de réalisation de l'électrovanne conforme à l'invention, la chambre du débitmètre peut comporter :
*a*. Une turbine à ailettes, montée libre en rotation autour de son axe, et
*b.* Une cellule de détection placée au voisinage des ailettes de ladite turbine.

Dans un second temps, l'invention vise à proposer un dispositif de surveillance et de commande d'un circuit d'alimentation en fluide d'une installation, le dispositif comportant :
- Une électrovanne telle que définie ci-avant,
- Un module de réception et de traitement de données transmises par le débitmètre, ledit module de réception et de traitement de données étant apte à transmettre des ordres au dispositif de commande du moyen de fermeture et étant apte à générer et transmettre des informations à un appareil d'utilisateur extérieur au dispositif via un réseau de diffusion d'informations, et
- Un dispositif d'alimentation en énergie apte à recevoir une source d'énergie pour alimenter le module de réception et de traitement de données, le débitmètre et le dispositif de commande du moyen de fermeture.

Le dispositif conforme à l'invention peut comporter un boitier dans lequel sont accueillis notamment ladite électrovanne, ledit module de réception et de traitement des données et ledit dispositif d'alimentation en énergie. Dans le cadre de ce mode de réalisation, ledit boitier comporte en outre une entrée de boitier qui est conçue pour livrer passage à l'entrée de ladite électrovanne et une sortie de boitier qui est conçue pour livrer passage à la sortie de l'électrovanne.

Selon un mode de réalisation avantageux du dispositif conforme à l'invention, le module de réception et de traitement de données comporte une carte électronique qui est conçue pour analyser les données fournies par le débitmètre, générer et transmettre des signaux d'information audit appareil d'utilisateur.

Selon encore un mode de réalisation du dispositif conforme à l'invention, la carte électronique est conçue pour recevoir et analyser des données transmises par ledit appareil d'utilisateur et pour commander une action de l'électrovanne en réponse aux données reçues via le dispositif de commande du moyen de fermeture de l'électrovanne.

Avantageusement, le module de réception et de traitement de données transmet des signaux d'informations via CPL, Bluetooth, Wifi ou ondes radios.

Enfin, l'invention concerne un ensemble comportant un dispositif tel que défini ci-dessus et un appareil apte à recevoir des informations et/ou à transmettre des informations au module de réception et traitement de données dudit dispositif.

Dans le cadre d'un mode de réalisation de l'ensemble conforme à l'invention, l'appareil est apte à commander des scénarios de fonctionnement dudit dispositif.

Pour pouvoir être exécutée, l'invention est exposée de façon suffisamment claire et complète dans la description suivante qui est, en plus, accompagnée de dessins dans lesquels :
- La figure 1 est une vue en perspective d'une électrovanne conforme à l'invention,
- La figure 2 est une vue de côté de l'électrovanne montrée en figure 1,
- La figure 3 est une vue de dessus de l'électrovanne montrée en figures 1 et 2,
- La figure 4 est une vue en coupe partielle de l'électrovanne montrée sur les figures précédentes,
- La figure 5 est une vue en perspective d'un dispositif conforme à l'invention,
- La figure 6 est une autre vue en perspective du dispositif montré en figure 5,
- La figure 7 est une encore une autre vue en perspective du dispositif montré en figure 5 et 6, dont une paroi a été retirée et dont les parois restantes sont illustrées en transparence afin de montrer le contenu du dispositif,
- La figure 8 est une vue de face du dispositif montré en figure 7,
- La figure 9 est une autre vue en perspective du dispositif conforme à l'invention, les parois du dispositif étant représentées en transparence, la figure illustrant l'arrière du dispositif et les éléments qu'il comporte,
- La figure 10 est encore une autre vue en perspective du dispositif, les parois latérales du dispositif ayant été retirées (excepté la paroi arrière),
- Et la figure 11 montre un ensemble conforme à l'invention, comprenant un dispositif représenté en perspective et monté sur une canalisation, ainsi qu'un appareil représenté schématiquement, tenu dans une main d'un utilisateur.

Dans la description qui suit, les termes « inférieur », « supérieur », « haut », « bas » etc... sont utilisés en référence aux dessins pour une plus grande facilité de compréhension. Ils ne doivent pas être compris comme étant des limitations de la portée de l'invention, notamment quant à l'orientation des éléments compris dans le dispositif, par exemple.

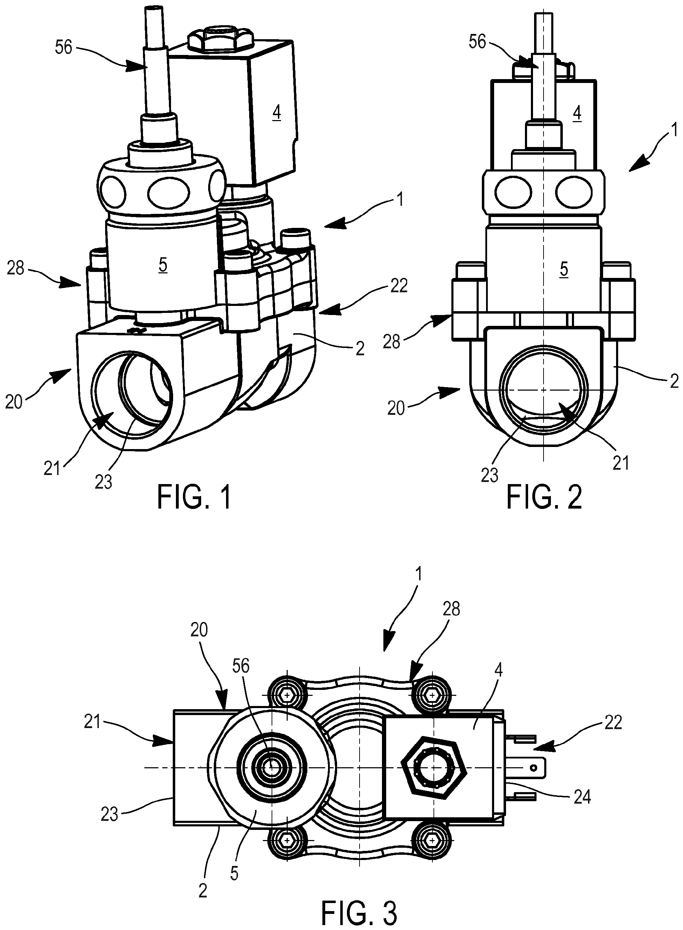

Dans un premier temps, il sera fait référence aux figures 1 à 4 pour décrire l'électrovanne conforme à l'invention. Dans un second temps, il sera fait référence au dispositif conforme à l'invention comportant l'électrovanne décrite sur les figures 1 à 4.

L'électrovanne décrite est illustrée est une électrovanne à commande différentielle ou à membrane assistée : l'électrovanne à membrane assistée fonctionne grâce une bobine de commande qui assure l'ouverture ou la fermeture de l'électrovanne par transmission de signaux.

L'électrovanne 1 montrée sur les figures comporte, comme il est en soit classique, un corps d'électrovanne 2 réalisé dans un matériau capable de supporter de fortes pressions internes.

Le corps 2 comporte une partie inférieure 20 sensiblement longitudinale et creuse, ouverte à ses deux extrémités 21 et 22. L'ouverture de l'extrémité 21 constitue une entrée 23 de l'électrovanne 1, à raccorder à un tuyau d'arrivée d'eau, par exemple (eau ou tout autre fluide) et l'ouverture de l'extrémité 22 constitue une sortie 24 de l'électrovanne 1, à raccorder également au tuyau. Autrement dit, l'électrovanne se monte sur un tuyau d'arrivée d'eau (dans notre exemple) en raccordant son entrée 23 et sa sortie 24 au tuyau de sorte que l'eau sous pression dans le tuyau entre dans l'électrovanne par l'entrée 23 et sorte de l'électrovanne par la sortie 24.

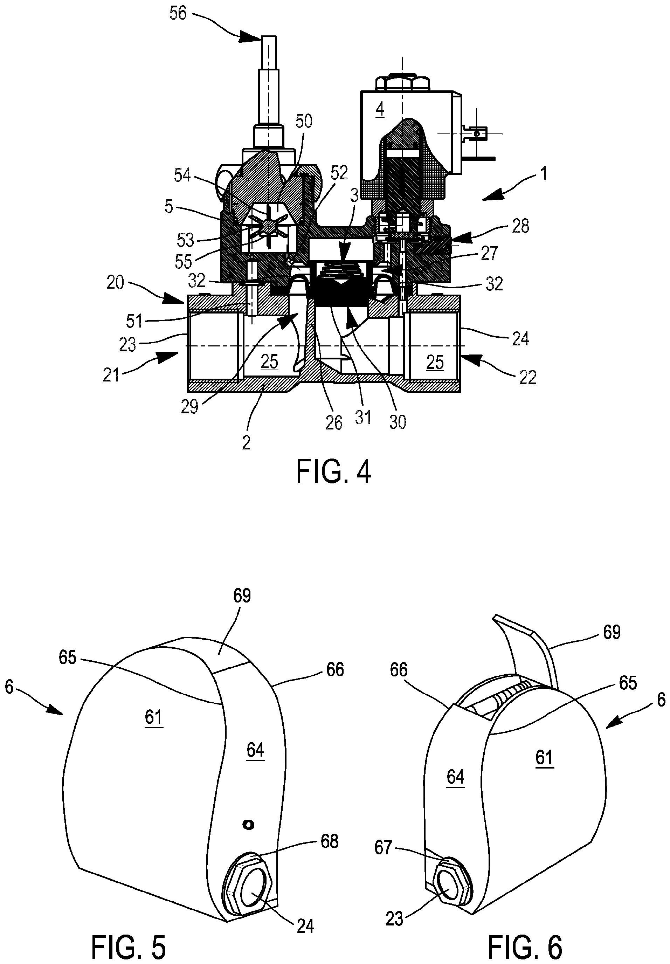

Un passage 25 est ainsi ménagé entre l'entrée 23 et la sortie 24 de la partie 1 de l'électrovanne et forme ce qui sera appelé par la suite un circuit primaire de passage de fluide (voir figure 4).

Comme on peut la partie inférieur 20 creuse comporte une paroi interne transversale 26 qui se dresse sensiblement à mi-distance entre l'entrée 23 et la sortie 24, formant un obstacle à l'intérieur du passage 25.

Cet obstacle constitue une paroi déflectrice qui oriente le fluide entrant dans le passage 25 de l'électrovanne 1 vers une chambre interne 27 ménagée dans une seconde partie (ou partie supérieure) 28 de corps 2 (voir figure 4).

L'électrovanne 1 comporte ainsi un second passage 29 permettant l'entrée de fluide dans la chambre 27. Elle comporte également un troisième passage 30 qui autorise la sortie du fluide de la chambre vers le passage 25 en aval de la paroi 26, en direction de la sortie 24 de l'électrovanne 1.

Le passage 30 peut être fermé ou ouvert, de sorte à interdire ou autoriser la circulation de fluide entre l'entrée 23 et la² sortie 24 de l'électrovanne. Pour ce faire, la chambre 27 comporte des moyens 3 de fermeture étanche qui sont mobiles entre une première position, dite ouverte, suivant laquelle le fluide est autorisé à circuler et à rejoindre le passage 25, et entre une seconde position, dite fermée, suivant laquelle le passage 30 est obstrué, obstruant également le passage 25 de sorte que toute circulation de fluide est impossible entre l'entrée 23 et la sortie 24 de l'électrovanne 1 (voir figure 4).

Les moyens 3 de fermeture étanche sont réalisés par un clapet 31 qui comporte une membrane périphérique 32, souple, fixée entre la partie inférieure 20 et la partie supérieure 28 du corps de l'électrovanne. Le clapet 31 est monté mobile entre une position de fermeture (montrée en figure 4) suivant laquelle il ferme le passage 30, et une position d'ouverture suivant laquelle le clapet remonte dans la chambre 27 et libère le passage 30 (position non illustrée).

Le clapet 31 est contraint en position de fermeture notamment par un système de bobine.

Quand le clapet est en position de fermeture, on dit que l'électrovanne est fermée, et quand le clapet est en position d'ouverture, on dit que l'électrovanne est ouverte.

Pour permettre le passage du clapet 31 de sa position fermée à sa position ouverte, l'électrovanne comporte un dispositif de commande 4, comme il est en soit connu.

Le dispositif de commande 4 est alimenté électriquement pour fonctionner. Le détail de fonctionnement de ce type de dispositif de commande ne sera pas décrit ici, étant connu de l'homme du métier et non nécessaire à la compréhension de l'invention.

Conformément à l'invention, l'électrovanne 1 comporte un débitmètre 5 (ou détecteur de débit 5).

Le débitmètre 5 et le dispositif de commande sont tous deux associés à la partie supérieure 28 du corps 2 de l'électrovanne. Le débitmètre 5 est incorporé dans la partie supérieure 28 du corps 2.

La figure 4 montre cet agencement : le débitmètre comporte une chambre, constituant une seconde chambre interne 50 ménagée dans la partie supérieure du corps 2. La chambre 50 comporte une entrée de chambre 51 par laquelle entre le fluide et une sortie de chambre 52 par laquelle sort le fluide.

L'entrée de chambre 51 et la sortie de chambre 52 débouchent toutes les deux dans le circuit primaire de passage du fluide, c'est-à-dire dans le passage 25. On peut ainsi considérer que le circuit emprunté par le fluide pénétrant dans la chambre 50 et sortant de la chambre est un circuit secondaire de passage de fluide. Ce circuit secondaire de passage de fluide permet d'isoler une partie du flux traversant l'électrovanne : c'est grâce à cet isolement que l'on peut détecter des micro-fuites dans la canalisation.

La chambre 50 du débitmètre 5 comporte une turbine 53, montée libre en rotation autour de son axe, et comportant six ailettes 54.

La chambre 50 comporte également une cellule de détection 55, placée au voisinage des ailettes 54 de la turbine, qui permet de détecter le passage d'une ailette devant elle. Ainsi, quand la turbine 53 réalise un tour complet, la cellule de détection compte six passages d'ailettes.

Chaque passage d'ailette devant la cellule 55 est alors transformé en impulsion électrique qui peut alors être transmise sous forme de signal à un module /dispositif d'analyse extérieur, par exemple, au moyen d'un câble 56.

Le débitmètre 5 est ainsi capable d'acquérir des données concernant le débit du fluide traversant l'électrovanne 1, et en particulier le débit du flux secondaire extrait du flux primaire, et capable de transmettre ces données acquises à partir du flux secondaire à un module extérieur à l'électrovanne.

On comprend de ce qui précède comment l'électrovanne conforme à l'invention permet, à la fois, de commander l'alimentation en fluide d'une installation, en fermant ou en ouvrant l'électrovanne 1 grâce au dispositif de commande 4 des moyens de fermetures 30 du circuit primaire de passage 25 du fluide.

On comprend également comment l'invention permet de surveiller l'alimentation en fluide d'une installation grâce au débitmètre intégré 5 et au circuit secondaire de passage du fluide.

Ainsi réalisée, l'électrovanne 1 constitue un dispositif compact qui s'intègre dans une installation de plomberie aussi facilement qu'une électrovanne classique, sans être plus encombrante qu'une électrovanne classique.

On va maintenant s'intéresser à un dispositif conforme à l'invention qui intègre une telle électrovanne et qui permet d'offrir à un utilisateur des services, notamment pour avertir l'utilisateur d'une fuite, pour commander à distance ou automatiquement la fermeture ou l'ouverture de l'électrovanne.

Le dispositif conforme à l'invention porte la référence 6 sur les figures.

Il a pour fonction de permettre à un utilisateur distant d'être informé de l'état de son réseau et/ou de le piloter à distance en déclenchant divers scénarios. Le dispositif 6 est programmable selon le planning de l'utilisateur, ou activable de manière ponctuelle via un smartphone, une tablette, un ordinateur etc.

L'utilisateur peut être un particulier, un hôtelier, une collectivité etc. et le dispositif peut être monté sur une canalisation de n'importe quel réseau et pour tout type de fluide.

Le dispositif 6 est activable quand l'utilisateur le souhaite, ou en réponse à un signal ou quand un programme intrinsèque se déclenche. Le dispositif communique avec l'appareil de l'utilisateur via CPL, Bluetooth, ondes radio, wifi ou tout autre moyen de transmission d'informations connu.

Le premier dispositif 6 qui est présenté comme exemple comporte un boitier 60 qui renferme tous les éléments propres au dispositif conforme à l'invention et qui se raccorde directement sur une canalisation. Ainsi réalisé, le boitier est facile à manipuler et à monter, puisqu'il se raccorde de façon classique en soit.

Le boitier 60 comporte deux parois sensiblement parallèles latérales (paroi avant 61 et paroi arrière 62), une paroi de fond 63, et une paroi de bord 64, reliant les deux tranches libres 65 et 66 des deux parois latérales avant 61 et arrière 62. La paroi de bord 64 épouse une forme courbe qui est définie par la forme courbe des tranches libres 65 et 66 des parois latérales 61 et 62.

Le boitier 60 comporte, conformément à l'invention, une entrée 67 réalisée par une ouverture traversante à travers la paroi de bord 64, au voisinage de la paroi de fond 63. Le boitier 60 comporte également une sortie 68 réalisée également par une ouverture traversante à travers la paroi de bord 64, à l'opposé de l'ouverture réalisant l'entrée 67 et au voisinage de la paroi de fond 63.

L'entrée 67 du boitier 60 est conçue pour accueillir l'entrée 23 de l'électrovanne et la sortie 68 du boitier 60 est conçue pour accueillir la sortie 24 de l'électrovanne. L'entrée 67 et la sortie 68 livrent donc passage (donnent accès) aux entrée 23 et sortie 24 de l'électrovanne.

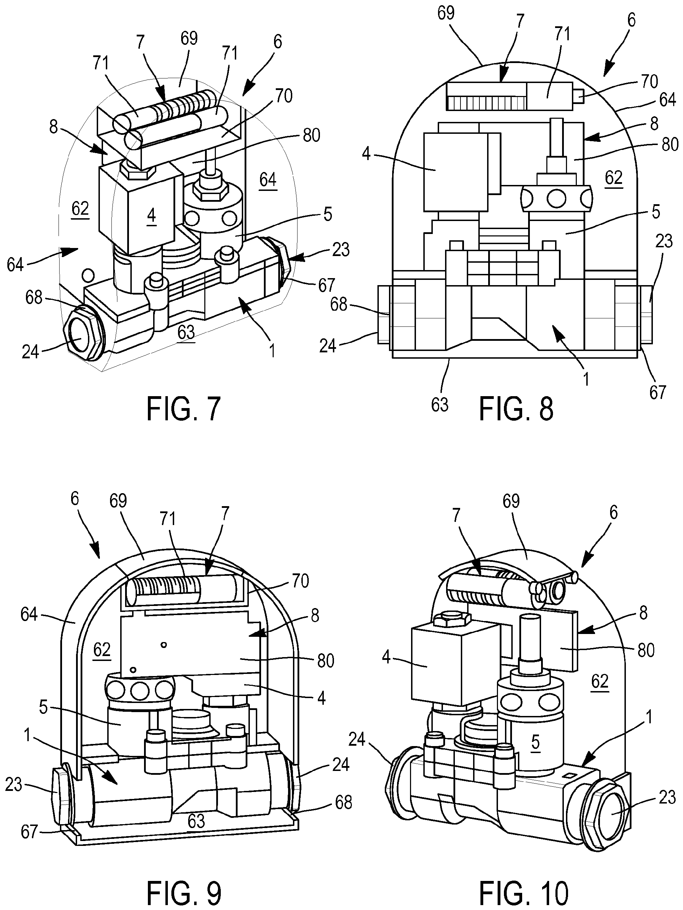

Le boitier comporte donc l'électrovanne décrite ci avant et montrée en figures 1 à 4. Comme on peut le voir sur les figures 7 à 10, l'électrovanne 1 repose sur le fond 63 du boitier.

Le dispositif de commande 4 et le débitmètre 5 sont tous deux alimentés en énergie (indirectement) par une source d'énergie 7 que comporte le dispositif de surveillance 6.

Dans le cadre de ce mode de réalisation, la source d'énergie 7 est réalisée par deux piles 71 reçues dans un logement 70 ménagé dans le boitier du dispositif. Le logement 70 comporte des bornes de raccordement des piles 71 et l'ensemble constitue un dispositif d'alimentation en énergie du dispositif de surveillance conforme à l'invention.

L'accès au logement 70, pour insérer des piles ou retirer les piles 71, se fait par une trappe d'ouverture 69 qui est réalisée par découpe d'une partie de paroi de bord 64 en région supérieure du boitier 60. La figure 6 notamment montre la trappe en position ouverture.

La trappe 69 est montée pivotante autour de l'une de ses côtés par une charnière qui la relie à la paroi de bord 64.

Conformément à l'invention, le dispositif d'alimentation en énergie (70, 71) alimente un module 8 de réception et de traitement de données auquel sont reliés le débitmètre 5 et le dispositif de commande 4 (le module 8 est visible sur les figures 7 à 10).

Le module 8 peut être réalisé concrètement de différentes manières : dans le cadre de ce mode de réalisation, il comporte une carte électronique 80 qui permet de recevoir des données, les analyser, générer de nouvelles données et les transmettre, à destination d'un appareil utilisateur 9 extérieur au dispositif 6, sous forme de signaux d'informations 90 via des réseaux de diffusion variés tels que le Wifi, le Bluetooth, ondes radios diverses etc.

La carte électronique 80 peut également recevoir des signaux d'informations 91 provenant de l'extérieur du boitier 60, les analyser et commander une action de l'électrovanne en réponse aux signaux 91, en transmettant des ordres au dispositif de commande 4 des moyens de fermeture de l'électrovanne.

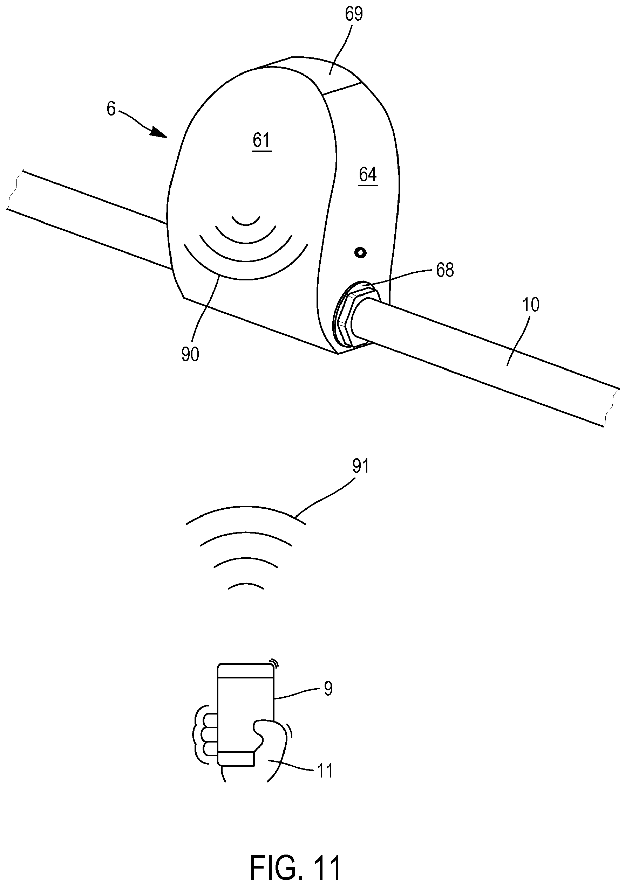

Il va maintenant être fait référence à la figure 11 pour expliquer un mode de fonctionnement d'un ensemble conforme à l'invention qui comprendrait un dispositif 6 conforme à l'invention, telle que décrit ci-avant et représenté sur les figures 7 à 10, ainsi qu'un appareil d'utilisateur 9 extérieur au dispositif.

Dans le cadre de cet exemple, le dispositif 6 est monté sur une canalisation 10 d'arrivée d'eau du domicile d'un utilisateur (illustré schématiquement par la main 11 sur la figure 11).

L'appareil d'utilisateur 9 est apte à mettre en oeuvre une application informatique, dédiée au fonctionnement du dispositif 6.

L'appareil utilisateur est par exemple un smartphone, comme illustré en figure 11. Le smartphone est apte à recevoir des informations 90 et à transmettre des informations 91 au module 8 de réception et traitement de données dudit dispositif 6.

Une fuite d'eau est repérée par le dispositif de surveillance 6 suite au traitement des données d'impulsions transmises par le débitmètre 5 au module 8.

Le module 8 envoie alors un signal 90 à l'appareil d'utilisateur 9 qui informe alors l'utilisateur de la présence d'une fuite dans le réseau d'alimentation de son domicile.

L'appareil d'utilisateur 9 indique également à l'utilisateur que le circuit d'alimentation en eau de son domicile a été coupé : en effet, dans le scénario présent, la détection de la fuite d'eau par le module 8 a déclenché la fermeture de l'électrovanne 1 car le module 8, en plus de la transmission du signal 90, à transmis au dispositif de commande 4 un ordre de fonctionnement : celui de fermer le clapet 31.

L'utilisateur est alors invité, via l'application de son smartphone 9, à contacter un plombier.

Le module 8 peut également avoir envoyé un signal à un autre appareil dont serait équipé un plombier, pour commander une intervention du plombier.

On comprend de ce qui précède comment l'invention permet de surveiller l'état de fonctionnement d'un système d'alimentation en fluide d'une installation, que ce soit une installation de plomberie domestique ou une autre installation qui comprendrait une canalisation à travers laquelle transite un fluide alimentant l'installation.

Il devra toutefois être compris que l'invention n'est pas limitée au mode de réalisation spécifiquement représenté sur les figures et qu'elle s'étend à la mise en oeuvre de tout moyen équivalent.

Par exemple, dans le dispositif de surveillance et de commande 6 pourrait présenter une autre forme et le module 8 pourrait être réalisé différemment : il pourrait comprendre d'autres moyens techniques que ceux décrits, réalisant les mêmes fonctions techniques, sans sortir du cadre de l'invention.

Egalement, dans le cadre de l'ensemble conforme à l'invention, l'appareil d'utilisateur 11 pourrait être différent: il pourrait s'agir d'un boitier dédié au fonctionnement du dispositif de surveillance et capable de communiquer avec ce dernier via CPL, Bluetooth, ondes radio etc.

L'appareil serait programmé pour mettre en oeuvre plusieurs scénarios en fonction des informations qui lui seraient transmises par le dispositif de surveillance 6. Par exemple, il pourrait être envisagé que l'appareil d'utilisateur puisse commander la gestion des flux de fluide d'une installation, commander un mode de fonctionnement de l'électrovanne suivant certaines plages horaires (dans le cadre d'un arrosage automatique de jardin, par exemple) enregistrer des données dans un historique, indiquer à l'utilisateur sa consommation en eau...

Le dispositif 6 de surveillance pourrait également être équipé d'une alarme sonore ou bien il pourrait transmettre des informations à l'appareil sur le niveau de consommation des piles 71.

Le dispositif conforme à l'invention trouve un intérêt particulier pour les professionnels de la plomberie, les distributeurs de domotique, les particuliers et les professionnels dont l'activité nécessite la mise en oeuvre d'une installation dans laquelle circule un fluide (jardiniers, agriculteurs, collectivités, par exemple).

## Revendications

1. Électrovanne (1) pour surveiller et commander l'alimentation en fluide d'une installation d'un bâtiment, ladite installation comportant une canalisation (10) dans laquelle circule un fluide, ladite électrovanne comportant :
- Un corps (2) d'électrovanne,
- Une entrée (23) à raccorder à ladite canalisation (10),
- Une sortie (24) à raccorder également à ladite canalisation (10),
- Un passage (25) ménagé entre ladite entrée (24) et ladite sortie (25), formant un circuit primaire de passage de fluide, équipé d'un moyen de fermeture (31) étanche qui est mobile entre une position ouverte, suivant laquelle le fluide est autorisée à circuler dans ledit passage (25) entre ladite entrée (23) et ladite sortie (24), et une position fermée suivant laquelle le passage (25) est obstrué et interdit toute circulation de fluide entre ladite entrée (23) et ladite sortie (24),
- Un dispositif (4) de commande du moyen de fermeture (31),
ladite électrovanne comportant en outre un débitmètre (5) apte à acquérir des données concernant le débit de fluide traversant ladite électrovanne et apte à transmettre lesdites données acquises à un module extérieur (8) à ladite électrovanne,
**Caractérisée en ce que** le débitmètre (5) comporte une chambre (50) ménagée dans le corps (2) de l'électrovanne (1), ladite chambre (50) comportant en outre une entrée de chambre (51) et une sortie de chambre (52) qui sont reliées audit circuit primaire de passage du fluide dans l'électrovanne (1), un circuit secondaire de passage de fluide étant défini entre ladite entrée de chambre (51) et ladite sortie de chambre (52).

2. Électrovanne (1) selon la revendication 1, **caractérisée en ce que** les données acquises et transmises sont des impulsions électriques.

3. Électrovanne (1) selon la revendication 1 ou 2, **caractérisée en ce que** ladite chambre (50) comporte :
a. Une turbine (53) à ailettes (54), montée libre en rotation autour de son axe, et
b. Une cellule de détection (55) placée au voisinage des ailettes (54) de ladite turbine (53),

4. Dispositif (6) de surveillance et de commande d'un circuit d'alimentation en fluide d'une installation, le dispositif comportant :
- Une électrovanne (1) selon l'une quelconque des revendications précédentes,
- Un module (8) de réception et de traitement de données transmises par le débitmètre (5), ledit module (8) de réception et de traitement de données étant apte à transmettre des ordres au dispositif de commande (4) du moyen de fermeture (31) et étant apte à générer et transmettre des informations (90) à un appareil d'utilisateur (9) extérieur au dispositif (6) via un réseau de diffusion d'informations,
- Un dispositif (7) d'alimentation en énergie apte à recevoir une source d'énergie (71) pour alimenter le module (8) de réception et de traitement de données, le débitmètre (5) et le dispositif de commande (4) du moyen de fermeture (31).

5. Dispositif (6) selon la revendication 4, **caractérisé en ce qu'**il comporte un boitier (60) dans lequel sont accueillis ladite électrovanne (1), ledit module (8) de réception et de traitement des données et ledit dispositif (7) d'alimentation en énergie, ledit boitier (60) comportant en outre une entrée de boitier (67) conçue pour livrer passage à l'entrée (23) de ladite électrovanne et une sortie de boitier (68) conçue pour livrer passage à la sortie (24) de l'électrovanne.

6. Dispositif selon la revendication 4 ou 5, **caractérisé en ce que** le module (8) de réception et de traitement de données comporte une carte électronique (80) conçue pour analyser les données fournies par le débitmètre (5), générer et transmettre des signaux d'information (90) audit appareil d'utilisateur (9).

7. Dispositif selon la revendication 6, **caractérisé en ce que** la carte électronique (80) est conçue pour recevoir et analyser des données (91) transmises par ledit appareil d'utilisateur (9) et pour commander une action de l'électrovanne en réponse aux données (91) reçues via le dispositif de commande (4) du moyen de fermeture (31) de l'électrovanne (1).

8. Dispositif selon l'une quelconque des revendications 6 ou 7, **caractérisé en ce que** le module (8) de réception et de traitement de données transmet des signaux d'informations (90) via CPL, Bluetooth, Wifi ou ondes radios.

9. Ensemble comportant un dispositif (6) selon l'une quelconque des revendications 4 à 8 et un appareil (9) apte à recevoir des informations (90) et/ou à transmettre des informations (91) au module (8) de réception et traitement de données dudit dispositif (6).

10. Ensemble selon la revendication 9, **caractérisé en ce que** l'appareil (9) est apte à commander des scénarios de fonctionnement dudit dispositif (6).
